# EUROPÄISCHE PATENTSCHRIFT

(11) **EP 3 610 559 B1**
(45) Veröffentlichungstag und Bekanntmachung des Hinweises auf die Patenterteilung: **03.07.2024**
(21) Anmeldenummer: 18713609.8
(22) Anmeldetag: 21.03.2018
(51) Int. Cl.: H02K 1/27, H02K 15/12, H02K 15/16

(54) **ELEKTRISCHER ANTRIEBSMOTOR**
ELECTRIC DRIVE MOTOR
MOTEUR D'ENTRAÎNEMENT ÉLECTRIQUE

(30) Priorität: 10.04.2017 DE 102017206092
(43) Veröffentlichungstag der Anmeldung: 19.02.2020
(73) Patentinhaber: BSH Hausgeräte GmbH, 81739 München (DE)
(72) Erfinder: BLAZ, Robert, 06601 Humenne (SK); FARKAS, Viliam, 07101 Michalovce (SK); KALAVSKY, Michal, 04023 Kosice (SK)
(86) Internationale Anmeldenummer: PCT/EP2018/057108
(87) Internationale Veröffentlichungsnummer: WO 2018/188916

(56) Entgegenhaltungen:
- EP-A2- 2 908 407
- JP-A- 2002 371 962

## Beschreibung

Die Erfindung betrifft einen elektrischen Antriebsmotor, aufweisend einen Stator mit Polschuhen und wenigstens einer elektrisch ansteuerbaren Statorwicklung, und einen im Feld der Statorwicklung unter Belassen eines Ringspaltes drehantreibbar gelagerten Permanentmagnetenrotor, der eine Motorwelle und ein auf der Motorwelle sitzendes Blechpaket aufweist, das zumindest eine der Anzahl von Polen des Permanentmagnetenrotors entsprechende Anzahl von Permanentmagneten aufweist. Die Erfindung betrifft außerdem ein Haushaltsgerät aufweisend einen solchen elektrischen Antriebsmotor und ein Spritzgießwerkzeug zur Herstellung eines solchen, durch eine Kunststoffeinfassung umspritzten elektrischen Antriebsmotors.

Die WO 03/081748 A1 beschreibt einen mehrphasigen Innenläufermotor mit einem genuteten Stator, einen vom Stator durch einen Luftspalt getrennten Rotor, welcher ein Blechpaket mit einer Mehrzahl von ausgeprägten Polen aufweist, die zwischen sich Pollücken definieren, wobei im Blechpaket des Rotors Taschen ausgebildet sind, welche jeweils zwischen zwei ihnen benachbarten Pollücken des Rotors verlaufen. In diesen Taschen sind Permanentmagnete angeordnet, welche im Wesentlichen radial magnetisiert sind und von denen jeder zwei pollückenseitige Enden aufweist, die den ihm benachbarten Pollücken des Rotors zugewandt sind. Weiterer druckschriftlicher Stand der Technik ist aus der EP 2 908 407 A2 und der JP 2002 371962 A bekannt.

Die Aufgabe der Erfindung ist es, einen elektrischen Antriebsmotor, insbesondere einen bürstenlosen Gleichstrommotor zu schaffen, dessen Permanentmagnetenrotor einfacher auswuchtbar ist. Ferner ist es eine Aufgabe der Erfindung ein Haushaltsgerät, wie eine Geschirrspülmaschine, eine Waschmaschine, einen Trockner oder eine Dunstabzugshaube mit einem derartigen elektrischen Antriebsmotor anzugeben.

Die Aufgabe der Erfindung wird gelöst durch einen elektrischen Antriebsmotor gemäß Anspruch 1.

Der elektrische Antriebsmotor kann insbesondere einen feststehenden Außenstator und einen drehbar gelagerten Innenrotor aufweisen. Der Permanentmagnetenrotor weist mehrere Pole, insbesondere vier, sechs, acht oder mehr Pole auf. Jedem Permanentmagnet des Permanentmagnetenrotors kann eine Tasche im Blechpaket zugeordnet sein. In jeweils eine dieser Taschen kann ein einzelner Permanentmagnet eingesetzt und darin insbesondere gegen Verrutschen fixiert sein. Üblicherweise können alle Permanentmagnete des Permanentmagnetrotors identisch ausgebildet sein. Jeder Permanentmagnet kann eine quaderförmige Gestalt aufweisen. Dabei können die beiden gegenüberliegenden größten Begrenzungsflächen des Permanentmagnets in Umfangsrichtung ausgerichtet sein, wobei seitliche kleinere Begrenzungsflächen die Pole der Magneten bilden. Die Permanentmagnete können über den Umfang des Permanentmagnetenrotors gleichmäßig verteilt angeordnet sein.

Jede Tasche kann eine der Gestalt der Permanentmagnete entsprechende Form aufweisen, wobei die Tasche geringfügig größer ausgebildet ist, so dass jeweils ein einzelner Permanentmagnet in eine Tasche eingefügt werden kann.

Das Blechpaket des Permanentmagnetenrotors wird von mehreren, insbesondere gestanzten Blechzuschnitten gebildet, welche deckungsgleich übereinander gestapelt und zu einem kompakten Paket miteinander verbunden sind. Das Blechpaket kann insoweit durch Stanzpaketierung hergestellt sein. Die deckungsgleich übereinander gestapelten Bleche können durch Verbindungsmittel, wie beispielsweise durch Schweißen, Nieten, Klammern oder eben Stanz- bzw. Klebepaketierung verbunden sein. Bei einer Stanzpaketrierung wird durch Umformung einzelner Bereiche aller Einzelbleche sickenförmige oder kiemenförmige Vorsprünge und Rücksprünge in den Einzelblechen gebildet, wobei die Vorsprünge eines Einzelbleches jeweils in die korrespondierenden Rücksprünge eines unmittelbar benachbarten Einzelbleches eindringen und derart eine formschlüssige und/oder reibschlüssige Verbindung aller Einzelbleche zu dem kompletten Blechpaket entsteht.

Die Permanentmagnete können beispielsweise eine großflächige, im Wesentlichen rechteckige in Umfangsrichtung in Drehrichtung weisende vordere Begrenzungsfläche aufweisen und eine gegenüberliegende gleichgroße, im Wesentlichen rechteckige in Umfangsrichtung entgegen der Drehrichtung weisende hintere Begrenzungsfläche aufweisen. Eine innere schmale Begrenzungsfläche kann auf die Rotorwelle zu weisen und eine gegenüberliegende äußere schmale Begrenzungsfläche kann einen magnetischen Pol des Rotors bilden. Alle Kanten des quaderförmigen Permanentmagnets können mit einer Fase versehen sein bzw. abgerundet ausgebildet sein.

Indem die Kunststoffeinfassung das Blechpaket an seinen beiden axialen Stirnseiten überdeckende Seitenwände aufweist, die jeweils mehrere Ausnehmungen aufweisen, welche Bereiche der von der Seitenwand der Kunststoffeinfassung überdeckten axialen Stirnseite freilassen, als Zugangsöffnung zum Anbohren des Blechpakets im Rahmen eines Auswuchtens des Permanentmagnetenrotors, kann der Permanentmagnetenrotor eine verbesserte Laufruhe aufweisen, da der Permanentmagnetenrotor einfacher, besser und/oder genauer gewuchtet werden kann. Ein Wuchten des Permanentmagnetenrotors erfolgt erfindungsgemäß dadurch, dass ein Bohrer in die entsprechend benötigte Ausnehmung eingeführt wird, dabei die Bohrerspitze unmittelbar in dem durch die Ausnehmung freigelassenen Bereich der axialen Stirnseite des Blechpakets angesetzt werden kann, um Material des Blechpakets durch Anbohren abzutragen. Aufgrund der Ausnehmung entfällt ein Anbohren des Kunststoffmaterials der Kunststoffeinfassung. Dies verbessert den Lauf des Bohrers und verbessert die Positioniergenauigkeit für das Abtragen von Material von dem Blechpaket, um diesen durch das Abtragen sehr genau auszuwuchten.

Das Blechpaket ist vorzugsweise kreisringförmig ausgebildet, wobei beide axiale Stirnseiten des Blechpakets von jeweils einer Seitenwand der Kunststoffeinfassung begrenzt sind. Dies bedeutet, dass auch beide gegenüberliegende Seitenwände der Kunststoffeinfassung jeweils mit mehreren Ausnehmungen versehen sind. Die Umfangswand des Blechpakets bleibt hingegen bevorzugt frei von einer Kunststoffeinfassung. Dies bedeutet, dass in einer solchen Ausführungsform die Umfangswand des Blechpakets unmittelbar den Ringspalt des Antriebsmotors begrenzt. In diesem Zusammenhang wird ein Abtrag von Material des Blechpakets zu Auswuchtzwecken auch nicht direkt an der Umfangswand des Blechpakets vorgenommen, sondern ausschließlich an den axialen Stirnseiten des Blechpakets. Die Ausnehmungen in der Kunststoffeinfassung sollen dabei bevorzugt auf einem möglichst großen Durchmesser bzw. Radius liegen, so dass beim Auswuchten möglichst wenig Material vom Blechpaket abgetragen werden muss, um dasselbe Wuchtergebnis zu erhalten.

Die wenigstens eine Ausnehmung bzw. die mehreren Ausnehmungen können bereits während des Spritzgießens der Kunststoffeinfassung erzeugt werden. Dies kann beispielsweise dadurch erfolgen, dass die Kavität der Spritzgießform den gewünschten Ausnehmungen entsprechende Schieber aufweist, welche Platzhalter während des Spritzvorgangs bilden, so dass die Räume, welche die Ausnehmungen bilden sollen, durch die Schieber besetzt sind und somit während des Spritzgießens nicht mit Kunststoffmaterial für die Kunststoffeinfassung ausgefüllt werden. Alternativ könnten in einer zwar nicht bevorzugten, aber gleichwohl möglichen Variante die ein oder mehreren Ausnehmungen ggf. auch nach einem Spritzgießen der Kunststoffeinfassung aus dem Kunststoffmaterial der Kunststoffeinfassung herausgeholt werden.

Die wenigstens eine Ausnehmung kann von einer kreiszylindrischen Durchgangsöffnung gebildet werden, die sich in axialer Richtung von einer Außenstirnseite der Seitenwand der Kunststoffeinfassung bis zu der axialen Stirnseite des Blechpakets erstreckt.

Die kreiszylindrische Durchgangsöffnung kann dabei einen Durchmesser aufweisen, der lediglich geringfügig größer ist, als der Durchmesser des Bohrers, der Material zu Auswuchtzwecken von dem Blechpaket abträgt.

Die wenigstens eine Ausnehmung kann von einer konischen Durchgangsöffnung gebildet werden, die sich in axialer Richtung von einer Außenstirnseite der Seitenwand der Kunststoffeinfassung ausgehend bis zu der axialen Stirnseite des Blechpakets in ihrem Durchmesser sich verkleinernd erstreckt.

Die konische Form der Durchgangsöffnung ermöglicht dabei ein Vorzentrieren des Bohrers zum Abtragen von Material des Blechpaktes während des Auswuchtens, so dass die genaue Stelle, an welcher der Bohrer zum Abtragen ansetzten soll, besonders genau eingehalten werden kann.

Die Seitenwand der Kunststoffeinfassung weist mehrere in Umfangsrichtung verteilt angeordnete Ausnehmungen auf. Die mehreren in Umfangsrichtung verteilt angeordneten Ausnehmungen können insbesondere auf einem größeren Durchmesser liegen, als die Mittelpunkte der Permanentmagnete.

Die Ausnehmungen liegen insoweit stets außerhalb der Bereiche, in denen die Permanentmagnete liegen, da vorzugsweise nicht die Permanentmagnete angebohrt werden sollen, sondern das die Permanentmagnete tragende Blechpaket. Die Ausnehmungen werden auch bevorzugt separat zu anderen Öffnungen in der Kunststoffeinfassung vorgesehen, die beispielsweise vorhanden sind, wenn Fixierstäbe eines Spritzgießwerkzeugs, die ausgebildet sind, das Blechpaket während eines Umspritzens mit Kunststoff in einer vorbestimmten Position innerhalb der Kavität der Spritzgießform zu halten, derartige Öffnungen bedingen. Diese anderen Öffnungen halten den Rotor in der Kavität allerdings an den Permanentmagneten und nicht an dem Blechpaket unmittelbar.

Die Seitenwand der Kunststoffeinfassung kann in Umfangsrichtung jeweils in jedem zwischen zwei Permanentmagneten angeordneten Sektor der Seitenwand der Kunststoffeinfassung zwei in Umfangsrichtung voneinander beabstandete Ausnehmungen aufweisen.

Da die erfindungsgemäßen Ausnehmungen bevorzugt Bereiche des Blechpakets freilegen sollen, sind die Ausnehmungen in Sektoren angeordnet, die von den Sektoren, in denen die Permanentmagnete angeordnet sind, verschieden sind.

Das Blechpaket kann mehrere aufeinander gestapelte Einzelbleche aufweisen, die durch Verbindungsmittel zu einem das Blechpaket bildenden Gesamtstapel verbunden sind, wobei die Verbindungsmittel in Umfangsrichtung jeweils in einem der zwischen zwei Permanentmagneten ausgebildeten Sektoren derart angeordnet sind, dass die Ausnehmungen in der Seitenwand der Kunststoffeinfassung in Umfangsrichtung und/oder Radialrichtung versetzt zu den Verbindungsmitteln angeordnet sind.

Da die erfindungsgemäßen Ausnehmungen bevorzugt Bereiche des Blechpakets freilegen sollen, die zum Auswuchten angebohrt werden sollen, sind die Ausnehmungen in Umfangsrichtung und/oder Radialrichtung versetzt angeordnet, zu den Umfangsrichtungen und/oder Radialrichtungen, in denen die Verbindungsmittel angeordnet sind. Dadurch wird verhindert, dass die Verbindungsmittel während des Auswuchtens angebohrt werden könnten, was die Verbindungsmittel zerstören würde und das Blechpaket beschädigen würde.

Die Ausnehmungen in der Seitenwand können an einem Umfangsrand der Kunststoffeinfassung mit Umfangswandabschnitten versehen sein, durch welche die Ausnehmungen als randgeschlossene Aussparungen der Kunststoffeinfassung ausgebildet sind.

Indem die Ausnehmungen in der Seitenwand an einem Umfangsrand der Kunststoffeinfassung mit Umfangswandabschnitten versehen sind, durch welche die Ausnehmungen als randgeschlossene Aussparungen der Kunststoffeinfassung ausgebildet sind, wird eine geschlossenflächige Umfangswand des Permanentmagnetenrotors geschaffen. Dies ist vorteilhaft hinsichtlich des Ringspaltes des Antriebsmotors, insbesondere im Hinblick auf Luftströmungseffekte. So können durch die geschlossenflächige Umfangswand des Permanentmagnetenrotors turbulente Luftströmungen vermindert bzw. reduziert werden, was den Wirkungsgrad des Antriebsmotors verbessern kann.

Die Seitenwand der Kunststoffeinfassung kann in Umfangsrichtung jeweils in jedem zwischen zwei Permanentmagneten angeordneten Sektor der Seitenwand der Kunststoffeinfassung eine Vertiefung aufweisen.

Die Vertiefung kann dabei zwischen jeweils zwei benachbarten Permanentmagneten vorhanden sein. Die Vertiefungen können die Herstellung der Kunststoffeinfassung verbessert, Kunststoffmaterial einsparen und/oder das Gewicht des Permanentmagnetenrotors vermindern, was wiederum den Wirkungsgrad des Antriebsmotors verbessern kann.

Jeweils eine der Vertiefungen kann mittels jeweils eines Verbindungskanals in der Seitenwand der Kunststoffeinfassung an die Ausnehmungen luftströmungstechnisch angeschlossen sein. Die jeweiligen Verbindungskanäle können insbesondere dadurch gebildet werden, dass gegenüber einer glattwandigen Ausbildung der Seitenwand der Kunststoffeinfassung unnötige Materialanhäufungen der Spritzgussmasse für die Kunststoffeinfassung reduziert sind. Dies kann weitere Vorteile aufweisen, so z.B., dass aufgrund der dann gleichmäßigeren Materialwanddicke der Seitenwand der Kunststoffeinfassung geringere innere Materialspannungen auftreten, die insbesondere beim Abkühlen der heißen Spritzgussmasse für die Kunststoffeinfassung entstehen könnten. Aufgrund der geringeren benötigten Menge an Spritzgussmasse kann auch die Abkühldauer nach dem Spritzgießen der Kunststoffeinfassung reduziert sein, so dass die Zykluszeiten für mehrere Spritzgießvorgänge verkürzt werden können und eine schnellere Produktion möglich wird. Abschließend kann insgesamt Spritzgussmasse eingespart werden, was die Herstellung des Permanentmagnetenrotors kostengünstiger machen kann.

Die Ausnehmungen können in der Seitenwand an einem Umfangsrand der Kunststoffeinfassung mit Umfangswandabschnitten versehen sein, durch welche die Ausnehmungen als randgeschlossene Aussparungen der Kunststoffeinfassung ausgebildet sind, wobei die Umfangswandabschnitte an den Rändern der Ausnehmungen den Verbindungskanälen gegenüberliegend angeordnet sind.

Die Vertiefungen, die jeweils in jedem zwischen zwei Permanentmagneten angeordneten Sektor der Seitenwand der Kunststoffeinfassung angeordnet sind, können auf einem kleineren Durchmesser in der Seitenwand der Kunststoffeinfassung angeordnet sein, als die Ausnehmungen, die ebenfalls in Umfangsrichtung jeweils in den jeweils zwischen zwei Permanentmagneten angeordneten Sektoren der Seitenwand der Kunststoffeinfassung angeordnet sind.

Das Blechpaket kann eine Nabe mit einem Keilnabenprofil aufweisen, das ausgebildet ist, in Zusammenwirken mit einer glattwandigen Motorwelle, das Blechpaket drehfest auf der Motorwelle zu befestigen. Indem das Blechpaket ein Keilnabenprofil aufweist greifen nur die radial nach innen gerichteten Stirnseiten der Keilvorsprünge an der äußeren, glattwandigen Umfangswand der Motorwelle an. Das Blechpaket kann insbesondere mittels einer Presspassung auf der Motorwelle festgesetzt sein. Indem das Blechpaket nicht vollflächig auf die Motorwelle aufsitzt, sondern nur mit den die radial nach innen gerichteten Stirnseiten der Keilvorsprünge an der äußeren, glattwandigen Umfangswand der Motorwelle aufsitzt, kann bei dem Pressfügen von Blechpaket und Motorwelle sich das Blechpaket besser, d.h. leichter verformen und es entstehen im Blechpaket dann nur geringere innere Spannungen.

Darüber hinaus, d.h. alternativ oder ergänzend, kann jedoch das Spritzgießwerkzeug zur Herstellung der Kunststoffeinfassung innerhalb der Kavität ein zum Keilnabenprofil des Blechpaktes korrespondierendes Keilwellenprofil aufweisen, so dass das Blechpaket, das eine Nabe mit einem Keilnabenprofil aufweist, zum Zwecke des Umspritzens mit der Kunststoffeinfassung positionsgenau, insbesondere hinsichtlich der Drehlage des Blechpaktes bezüglich der Kavität, innerhalb der Kavität des Spritzgießwerkzeugs gelagert werden kann, nämlich indem das Blechpaket mittels des Keilnabenprofils auf das Keilwellenprofil der Kavität aufgesteckt wird.

Die Aufgabe wird außerdem gelöst durch ein Haushaltsgerät, insbesondere eine Geschirrspülmaschine, eine Waschmaschine, einen Trockner oder eine Dunstabzugshaube, aufweisend einen elektrischen Antriebsmotor nach einer oder mehreren der beschriebenen und/oder dargestellten Ausführungsformen.

Ein durch eine Kunststoffeinfassung umspritzter Permanentmagnetenrotor eines elektrischen Antriebsmotors nach einer oder mehreren der beschriebenen und/oder dargestellten Ausführungsformen kann mittels eines Spritzwerkzeugs hergestellt werden, das axial bewegliche Zentrierstifte aufweist, die ausgebildet und angeordnet sind, das in das Spritzgießwerkzeug zum Umspritzen eingesetzte Blechpaket radial und axial dadurch zentriert in der Kavität des Spritzgießwerkzeugs zu halten, dass die Zentrierstifte mit ihren Stirnseiten auf die Bereiche der axialen Stirnseiten des Blechpakets drücken, welche nach dem Umspritzen von den Ausnehmungen freigelassen sind.

Ein konkretes Ausführungsbeispiel eines erfindungsgemäßen elektrischen Antriebsmotors ist in der nachfolgenden Beschreibung unter Bezugnahme auf die beigefügten Figuren näher erläutert.

Es zeigen:
- Fig. 1: eine schematische Schnittdarstellung eines beispielhaften elektrischen Antriebsmotors;
- Fig. 2: eine Schnittdarstellung einer Motorwelle und eines erfindungsgemäßen Permanentmagnetenrotors, der auf der Motorwelle befestigt ist;
- Fig. 3: eine vergrößerte Teilschnittdarstellung einer Kunststoffeinfassung des Permanentmagnetenrotors gemäß Fig. 2 im Bereich einer erfindungsgemäßen Ausnehmung;
- Fig. 4: eine perspektivische Darstellung des Permanentmagnetenrotors gemäß Fig. 2 und Fig. 3 mit dem Blechpaket und der Kunststoffeinfassung in einer Alleinstellung;
- Fig. 5: eine axiale Schnittdarstellung des Blechpakets mit eingesetzten Permanentmagneten; und
- Fig. 6: eine Querschnittsansicht des Blechpakets mit durch die Kunststoffeinfassung umspritzten Permanentmagneten.

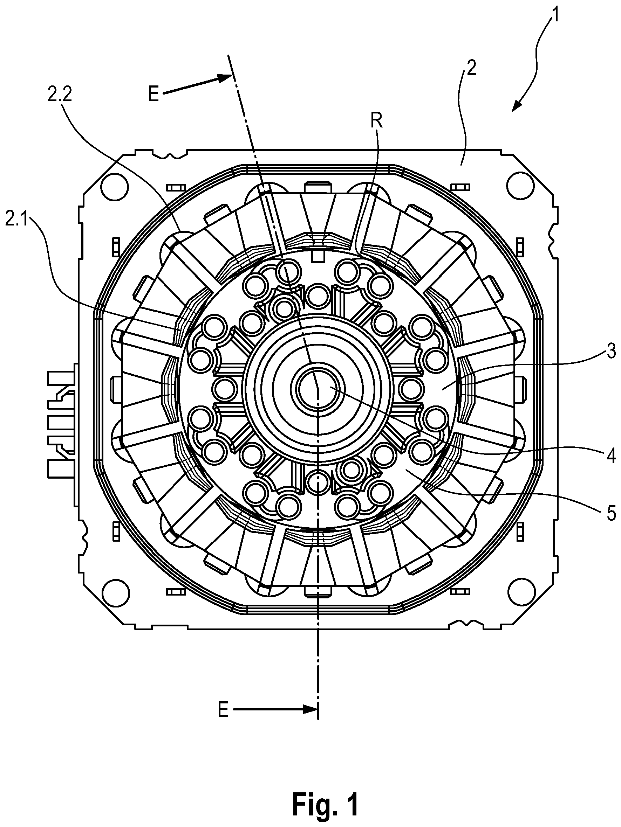

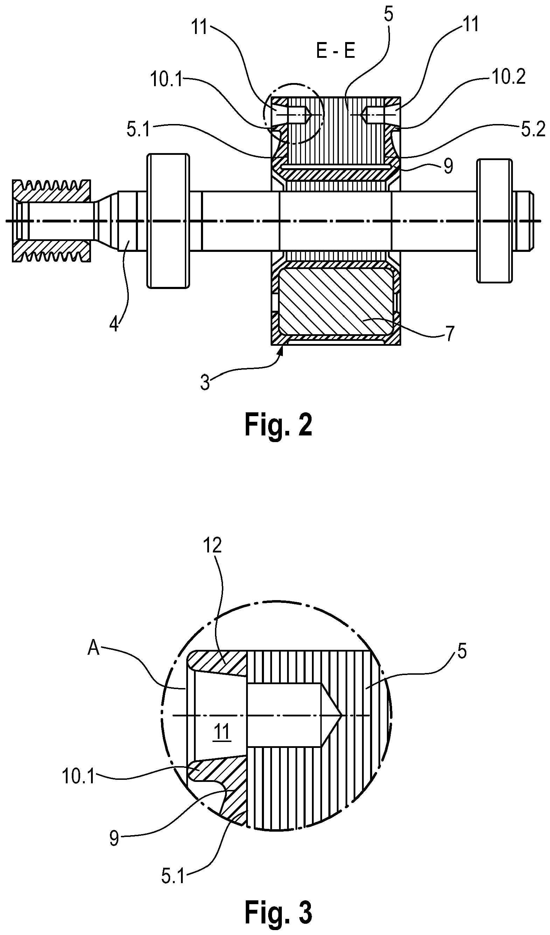

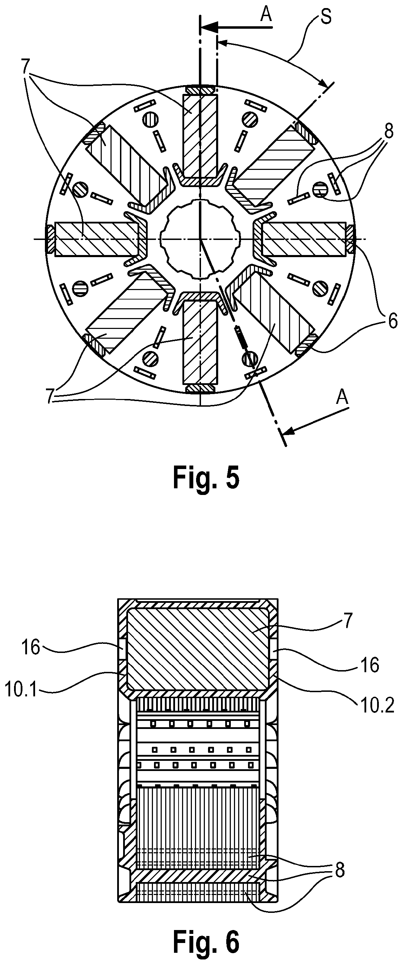

Die Fig. 1 bis Fig. 6 zeigen Bauteile eines beispielhaften elektrischen Antriebsmotors 1 einer beispielhaften Waschmaschine, aufweisend einen Stator 2 mit Polschuhen 2.1 und wenigstens einer elektrisch ansteuerbaren Statorwicklung 2.2, und einen im Feld der Statorwicklung 2.2 unter Belassen eines Ringspaltes R drehantreibbar gelagerten Permanentmagnetenrotor 3, der eine Motorwelle 4 und ein auf der Motorwelle 4 sitzendes Blechpaket 5 aufweist, das zumindest eine der Anzahl von Polen des Permanentmagnetenrotors 3 entsprechende Anzahl von Taschen 6 (Fig. 5) aufweist, in denen jeweils einer der Permanentmagnete 7 (Fig. 2) eingesetzt ist.

Der elektrische Antriebsmotor 1 weist im Falle des vorliegenden Ausführungsbeispiels einen feststehenden Außenstator und einen drehbar gelagerten Innenrotor auf. Der Permanentmagnetenrotor 3 weist mehrere Pole, insbesondere acht Pole auf. Jedem Permanentmagnet 7 des Permanentmagnetenrotors 3 ist eine Tasche 6 (Fig. 5) im Blechpaket 5 zugeordnet. In jeweils eine dieser Taschen 6 wird ein einzelner Permanentmagnet 7 eingesetzt und darin insbesondere gegen Verrutschen fixiert.

Üblicherweise sind alle Permanentmagnete 7 des Permanentmagnetrotors 3 identisch ausgebildet. Jeder Permanentmagnet 7 kann wie dargestellt eine quaderförmige Gestalt aufweisen. Dabei können die beiden gegenüberliegenden größten Begrenzungsflächen des Permanentmagnets 7 in Umfangsrichtung ausgerichtet sein, wie dies insbesondere in Fig. 2 und Fig. 6 gezeigt, wobei außenumfangsseitige Begrenzungsflächen der Permanentmagnete 7 die Pole des Permanentmagnetenrotors 3 bilden. Die Permanentmagnete 7 sind über den Umfang des Permanentmagnetenrotors 3 gleichmäßig verteilt angeordnet.

Jede Tasche 6 kann eine der Gestalt der Permanentmagnete 7 entsprechende Form aufweisen, wobei die Tasche 6 geringfügig größer ausgebildet ist, so dass jeweils ein einzelner Permanentmagnet 7 in eine Tasche 6 eingefügt werden kann. Das Blechpaket 5 des Permanentmagnetenrotors 3 wird von mehreren, insbesondere gestanzten Blechzuschnitten gebildet, welche deckungsgleich übereinander gestapelt und zu einem kompakten Paket miteinander verbunden sind. Das Blechpaket 5 kann insoweit durch Stanzpacketierung hergestellt sein. Die deckungsgleich übereinander gestapelten Bleche können durch Verbindungsmittel 8 (siehe Fig. 5), wie beispielsweise durch Schweißen, Nieten, Klammern oder eben Stanz- bzw. Klebepacketierung verbunden sein.

Die Permanentmagnete 7 können beispielsweise eine großflächige, im Wesentlichen rechteckige in Umfangsrichtung in Drehrichtung weisende vordere Begrenzungsfläche aufweisen und eine gegenüberliegende gleichgroße, im Wesentlichen rechteckige in Umfangsrichtung entgegen der Drehrichtung weisende hintere Begrenzungsfläche aufweisen. Eine innere schmale Begrenzungsfläche kann auf die Roboterwelle 4 zu weisen und eine gegenüberliegende äußere schmale Begrenzungsfläche kann einen magnetischen Pol des Rotors bilden. Alle Kanten des quaderförmigen Permanentmagnets 7 können mit einer Fase versehen sein bzw. abgerundet ausgebildet sein.

Der erfindungsgemäße elektrischer Antriebsmotor1 weist demgemäß einen Stator 2 mit Polschuhen 2.1 und wenigstens einer elektrisch ansteuerbaren Statorwicklung 2.2 auf, und einen im Feld der Statorwicklung 2.2 unter Belassen eines Ringspaltes R drehantreibbar gelagerten Permanentmagnetenrotor 3, der eine Motorwelle 4 und ein auf der Motorwelle 4 sitzendes Blechpaket 5 aufweist, das zumindest eine der Anzahl von Polen des Permanentmagnetenrotors 3 entsprechende Anzahl von Permanentmagneten 7 aufweist.

Die in dem Blechpaket 5 eingesetzten Permanentmagnete 7 sind von einer Kunststoffeinfassung 9 umspritzt, wobei erfindungsgemäß die Kunststoffeinfassung 9 das Blechpaket 5 an beiden axialen Stirnseiten 5.1, 5.2 überdeckende Seitenwände 10.1, 10.2 aufweist, die Ausnehmungen 11 aufweisen, welche Bereiche der von der Seitenwand 10.1, 10.2 der Kunststoffeinfassung 9 überdeckten axialen Stirnseite 5.1, 5.2 freilassen, als Zugangsöffnungen zum Anbohren des Blechpakets 5 im Rahmen eines Auswuchtens des Permanentmagnetenrotors 3.

Das Blechpaket ist im Falle des vorliegenden Ausführungsbeispiels vorzugsweise kreisringförmig ausgebildet, wobei beide axiale Stirnseiten 5.1, 5.2 des Blechpakets 5 von jeweils einer Seitenwand 10.1, 10.2 der Kunststoffeinfassung 9 begrenzt sind. Dies bedeutet, dass auch beide gegenüberliegende Seitenwände 10.1, 10.2 der Kunststoffeinfassung 9 jeweils mit mehreren Ausnehmungen 11 versehen sind. Die Umfangswand des Blechpakets 5 bleibt hingegen bevorzugt frei von einer Kunststoffeinfassung 9. Dies bedeutet, dass in einer solchen Ausführungsform die Umfangswand des Blechpakets 5 unmittelbar den Ringspalt R des Antriebsmotors 1 begrenzt. In diesem Zusammenhang wird ein Abtrag von Material des Blechpakets 5 zu Auswuchtzwecken auch nicht direkt an der Umfangswand des Blechpakets 5 vorgenommen, sondern ausschließlich an den axialen Stirnseiten 5.1, 5.2 des Blechpakets 5. Die Ausnehmungen 11 in der Kunststoffeinfassung 9 sollen dabei bevorzugt auf einem möglichst großen Durchmesser bzw. Radius liegen, so dass beim Auswuchten möglichst wenig Material vom Blechpaket 5 abgetragen werden muss, um dasselbe Wuchtergebnis zu erhalten.

Die wenigstens eine Ausnehmung 11 kann, wie insbesondere in Fig. 3 deutlich herausgestellt ist, von einer konischen Durchgangsöffnung gebildet werden, die sich in axialer Richtung von einer Außenstirnseite A der Seitenwand 10.1, 10.2 der Kunststoffeinfassung 9 ausgehend bis zu der axialen Stirnseite 5.1, 5.2 des Blechpakets 5 in ihrem Durchmesser sich verkleinernd erstreckt.

In einer nicht dargestellten, alternativen Ausführung kann die wenigstens eine Ausnehmung 11 von einer kreiszylindrischen Durchgangsöffnung gebildet wird, die sich in axialer Richtung von der Außenstirnseite A der Seitenwand 10.1, 10.2 der Kunststoffeinfassung 9 bis zu der axialen Stirnseite 5.1, 5.2 des Blechpakets 5 erstreckt.

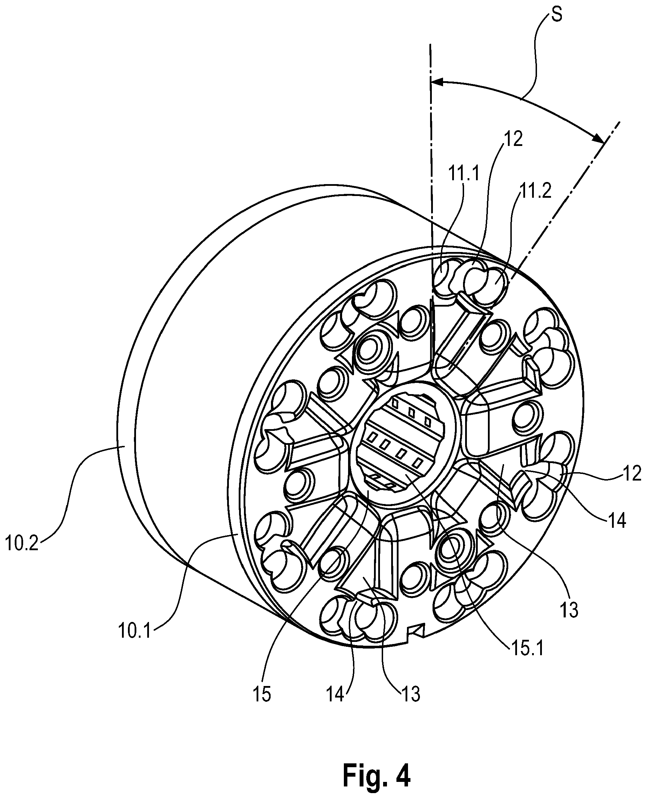

Wie insbesondere in Fig. 4 dargestellt ist, weist die Seitenwand 10.1, 10.2 der Kunststoffeinfassung 9 in Umfangsrichtung in jedem zwischen zwei Permanentmagneten 7 angeordneten Sektor S der Seitenwand 10.1, 10.2 der Kunststoffeinfassung 9 jeweils zwei in Umfangsrichtung voneinander beabstandete Ausnehmungen 11.1 und 11.2 auf.

Die Fig. 2 und Fig. 3 zeigt insbesondere, dass das Blechpaket 5 mehrere aufeinander gestapelte Einzelbleche aufweist, die durch die Verbindungsmittel 8, wie in Fig. 5 ersichtlich, zu einem das Blechpaket 5 bildenden Gesamtstapel verbunden sind, wobei die Verbindungsmittel 8 in Umfangsrichtung jeweils in dem der zwischen zwei Permanentmagneten 7 ausgebildeten Sektoren S derart angeordnet sind, dass die Ausnehmungen 11, 11.1, 11.2 in der Seitenwand 10.1, 10.2 der Kunststoffeinfassung 9 in Umfangsrichtung versetzt zu den Verbindungsmitteln 8 angeordnet sind.

Die Seitenwand 10.1, 10.2 der Kunststoffeinfassung 9 weist mehrere in Umfangsrichtung verteilt angeordnete Ausnehmungen 11, 11.1, 11.2 auf. Die mehreren in Umfangsrichtung verteilt angeordneten Ausnehmungen 11, 11.1, 11.2 liegen insbesondere auf einem größeren Durchmesser, als die Mittelpunkte der Permanentmagnete 7.

Die Ausnehmungen 11, 11.1, 11.2 liegen insoweit stets außerhalb der Bereiche, in denen die Permanentmagnete 7 liegen, da vorzugsweise nicht die Permanentmagnete 7 angebohrt werden sollen, sondern das die Permanentmagnete 7 tragende Blechpaket 5. Die Ausnehmungen 11, 11.1, 11.2 werden auch bevorzugt separat zu anderen Öffnungen 16 in der Kunststoffeinfassung 9 vorgesehen, die beispielsweise vorhanden sind, wenn Fixierstäbe eines Spritzgießwerkzeugs, die ausgebildet sind, das Blechpaket 5 während eines Umspritzens mit Kunststoff in einer vorbestimmten Position innerhalb der Kavität der Spritzgießform zu halten, derartige Öffnungen 16 bedingen. Diese anderen Öffnungen 16 halten den Rotor in der Kavität allerdings an den Permanentmagneten 7 und nicht an dem Blechpaket 5 unmittelbar.

Die Ausnehmungen 11, 11.1, 11.2 sind in der Seitenwand 10.1, 10.2 an einem Umfangsrand der Kunststoffeinfassung 9 mit Umfangswandabschnitten 12 (Fig. 4) versehen, durch welche die Ausnehmungen 11, 11.1, 11.2 als randgeschlossene Aussparungen der Kunststoffeinfassung 9 ausgebildet sind.

Die jeweilige Seitenwand 10.1, 10.2 der Kunststoffeinfassung 9 ist im Falle des dargestellten Ausführungsbeispiels in Umfangsrichtung jeweils in jedem zwischen zwei Permanentmagneten 7 angeordneten Sektor S der jeweiligen Seitenwand 10.1, 10.2 der Kunststoffeinfassung 9 mit einer Vertiefung 13 versehen, wie dies insbesondere in Fig. 4 ersichtlich ist.

Jeweils eine der Vertiefungen 13 ist im Falle des dargestellten Ausführungsbeispiels mittels jeweils eines Verbindungskanals 14 in der jeweiligen Seitenwand 10.1, 10.2 der Kunststoffeinfassung 9 an die Ausnehmungen 11, 11.1, 11.2 luftströmungstechnisch angeschlossen.

Die Ausnehmungen 11, 11.1, 11.2 in der Seitenwand 10.1, 10.2 sind an einem Umfangsrand der Kunststoffeinfassung 9 mit Umfangswandabschnitten 12 versehen, durch welche die Ausnehmungen 11, 11.1, 11.2 als randgeschlossene Aussparungen der Kunststoffeinfassung 9 ausgebildet sind, wobei die Umfangswandabschnitte 12 in diesem Fall an den Rändern der Ausnehmungen 11, 11.1, 11.2 den Verbindungskanälen 14 gegenüberliegend angeordnet sind.

Die Vertiefungen 13, die jeweils in jedem zwischen zwei Permanentmagneten 7 angeordneten Sektor S der Seitenwand 10.1, 10.2 der Kunststoffeinfassung 9 angeordnet sind, sind auf einem kleineren Durchmesser in der Seitenwand 10.1, 10.2 der Kunststoffeinfassung 9 angeordnet, als die Ausnehmungen 11, 11.1, 11.2, die ebenfalls in Umfangsrichtung jeweils in den jeweils zwischen zwei Permanentmagneten 7 angeordneten Sektoren S der Seitenwand 10.1, 10.2 der Kunststoffeinfassung 9 angeordnet sind.

Das Blechpaket 5 weist, wie insbesondere in Fig. 4 ersichtlich, eine Nabe 15 mit einem Keilnabenprofil 15.1 auf, das ausgebildet ist, in Zusammenwirken mit einer glattwandigen Motorwelle 4, das Blechpaket 5 drehfest auf der Motorwelle 4 zu befestigen.

### BEZUGSZEICHENLISTE

- 1: elektrischer Antriebsmotor
- 2: Stator
- 2.1: Polschuhe
- 2.2: Statorwicklung
- 3: Permanentmagnetenrotor
- 4: Motorwelle
- 5: Blechpaket
- 5.1: erste axiale Stirnseite
- 5.2: zweite axiale Stirnseite
- 6: Taschen
- 7: Permanentmagnete
- 8: Verbindungsmittel
- 9: Kunststoffeinfassung
- 10.1,10.2: Seitenwand
- 11: Ausnehmung
- 12: Umfangswandabschnitte
- 13: Vertiefung
- 14: Verbindungskanal
- 15: Nabe
- 15.1: Keilnabenprofil
- 16: Öffnungen
- A: Außenstirnseite
- R: Ringspalt
- S: Sektor

## Patentansprüche

1. Elektrischer Antriebsmotor, aufweisend einen Stator (2) mit Polschuhen (2.1) und wenigstens einer elektrisch ansteuerbaren Statorwicklung (2.2), und einen im Feld der Statorwicklung (2.2) unter Belassen eines Ringspaltes (R) drehantreibbar gelagerten Permanentmagnetenrotor (3), der eine Motorwelle (4) und ein auf der Motorwelle (4) sitzendes Blechpaket (5) aufweist, das zumindest eine der Anzahl von Polen des Permanentmagnetenrotors (3) entsprechende Anzahl von Permanentmagneten (7) aufweist, wobei die in dem Blechpaket (5) eingesetzten Permanentmagnete (7) von einer Kunststoffeinfassung (9) umspritzt sind, und die Kunststoffeinfassung (9) eine das Blechpaket (5) an jeder seiner beiden axialen Stirnseiten (5.1, 5.2) überdeckende Seitenwand (10.1, 10.2) aufweist, wobei die Seitenwände (10.1, 10.2) jeweils mehrere in Umfangsrichtung verteilt angeordnete Ausnehmungen (11.1, 11.2) aufweisen, die insbesondere auf einem größeren Durchmesser liegen als die Mittelpunkte der Permanentmagnete (7),
**dadurch gekennzeichnet, dass**
die Ausnehmungen (11) Bereiche der von den Seitenwänden (10.1, 10.2) der Kunststoffeinfassung (9) überdeckten axialen Stirnseiten (5.1, 5.2) als Zugangsöffnungen zum Anbohren des Blechpakets (5) im Rahmen eines Auswuchtens des Permanentmagnetenrotors (3) freilassen.

2. Elektrischer Antriebsmotor nach Anspruch 1, **dadurch gekennzeichnet, dass** die wenigstens eine Ausnehmung (11) von einer kreiszylindrischen Durchgangsöffnung gebildet wird, die sich in axialer Richtung von einer Außenstirnseite (A) der Seitenwand (10.1, 10.2) der Kunststoffeinfassung (9) bis zu der axialen Stirnseite (5.1, 5.2) des Blechpakets (5) erstreckt.

3. Elektrischer Antriebsmotor nach Anspruch 1, **dadurch gekennzeichnet, dass** die wenigstens eine Ausnehmung (11) von einer konischen Durchgangsöffnung gebildet wird, die sich in axialer Richtung von einer Außenstirnseite (A) der Seitenwand (10.1, 10.2) der Kunststoffeinfassung (9) ausgehend bis zu der axialen Stirnseite (5.1, 5.2) des Blechpakets (5) in ihrem Durchmesser sich verkleinernd erstreckt.

4. Elektrischer Antriebsmotor nach einem der Ansprüche 1 bis 3, **dadurch gekennzeichnet, dass** die Seitenwand (10.1, 10.2) der Kunststoffeinfassung (9) in Umfangsrichtung jeweils in jedem zwischen zwei Permanentmagneten (7) angeordneten Sektor (S) der Seitenwand (10.1, 10.2) der Kunststoffeinfassung (9) zwei in Umfangsrichtung voneinander beabstandete Ausnehmungen (11.1, 11.2) aufweist.

5. Elektrischer Antriebsmotor nach Anspruch 4, **dadurch gekennzeichnet, dass** das Blechpaket (5) mehrere aufeinander gestapelte Einzelbleche aufweist, die durch Verbindungsmittel (8) zu einem das Blechpaket (5) bildenden Gesamtstapel verbunden sind, wobei die Verbindungsmittel (8) in Umfangsrichtung jeweils in einem der zwischen zwei Permanentmagneten (7) ausgebildeten Sektoren (S) derart angeordnet sind, dass die Ausnehmungen (11, 11.1, 11.2) in der Seitenwand (10.1, 10.2) der Kunststoffeinfassung (9) in Umfangsrichtung und/oder Radialrichtung versetzt zu den Verbindungsmitteln (8) angeordnet sind.

6. Elektrischer Antriebsmotor nach einem der Ansprüche 1 bis 5, **dadurch gekennzeichnet, dass** die Ausnehmungen (11, 11.1, 11.2) in der Seitenwand (10.1, 10.2) an einem Umfangsrand der Kunststoffeinfassung (9) mit Umfangswandabschnitten (12) versehen sind, durch welche die Ausnehmungen (11, 11.1, 11.2) als randgeschlossene Aussparungen der Kunststoffeinfassung (9) ausgebildet sind.

7. Elektrischer Antriebsmotor nach einem der Ansprüche 1 bis 6, **dadurch gekennzeichnet, dass** die Seitenwand (10.1, 10.2) der Kunststoffeinfassung (9) in Umfangsrichtung jeweils in jedem zwischen zwei Permanentmagneten (7) angeordneten Sektor (S) der Seitenwand (10.1, 10.2) der Kunststoffeinfassung (9) eine Vertiefung (13) aufweist.

8. Elektrischer Antriebsmotor nach Anspruch 7, **dadurch gekennzeichnet, dass** jeweils eine der Vertiefungen (13) mittels jeweils eines Verbindungskanals (14) in der Seitenwand (10.1, 10.2) der Kunststoffeinfassung (9) an die Ausnehmungen (11, 11.1, 11.2) luftströmungstechnisch angeschlossen ist.

9. Elektrischer Antriebsmotor nach Anspruch 8, **dadurch gekennzeichnet, dass** die Ausnehmungen (11, 11.1, 11.2) in der Seitenwand (10.1, 10.2) an einem Umfangsrand der Kunststoffeinfassung (9) mit Umfangswandabschnitten (12) versehen sind, durch welche die Ausnehmungen (11, 11.1, 11.2) als randgeschlossene Aussparungen der Kunststoffeinfassung (9) ausgebildet sind, und die Umfangswandabschnitte (12) an den Rändern der Ausnehmungen (11, 11.1, 11.2) den Verbindungskanälen (14) gegenüberliegend angeordnet sind.

10. Elektrischer Antriebsmotor nach einem der Ansprüche 7 bis 9, **dadurch gekennzeichnet, dass** die Vertiefungen (13), die jeweils in jedem zwischen zwei Permanentmagneten (7) angeordneten Sektor (S) der Seitenwand (10.1, 10.2) der Kunststoffeinfassung (9) angeordnet sind, auf einem kleineren Durchmesser in der Seitenwand (10.1, 10.2) der Kunststoffeinfassung (9) angeordnet sind, als die Ausnehmungen (11, 11.1, 11.2), die ebenfalls in Umfangsrichtung jeweils in den jeweils zwischen zwei Permanentmagneten (7) angeordneten Sektoren (S) der Seitenwand (10.1, 10.2) der Kunststoffeinfassung (9) angeordnet sind.

11. Elektrischer Antriebsmotor nach einem der Ansprüche 1 bis 10, **dadurch gekennzeichnet, dass** das Blechpaket (5) eine Nabe (15) mit einem Keilnabenprofil (15.1) aufweist, das ausgebildet ist, in Zusammenwirken mit einer glattwandigen Motorwelle (4), das Blechpaket (5) drehfest auf der Motorwelle (4) zu befestigen.

12. Haushaltsgerät, insbesondere Geschirrspülmaschine, Waschmaschine, Trockner oder Dunstabzugshaube, aufweisend einen elektrischen Antriebsmotor (1) nach einem der Ansprüche 1 bis 11.

## Claims

1. Electric drive motor, having a stator (2) with pole shoes (2.1) and at least one electrically controllable stator winding (2.2), and a permanent magnet rotor (3) mounted in a rotationally driveable manner in the field of the stator winding (2.2) while retaining an annular gap (R), said permanent magnet rotor having a motor shaft (4) and a laminated core (5) resting on the motor shaft (4), said laminated core having at least a number of permanent magnets (7) which corresponds to the number of poles of the permanent magnet rotor (3), wherein the permanent magnets (7) inserted in the laminated core (5) are extrusion-coated by a plastic lining (9) and the plastic lining (9) has a side wall (10.1, 10.2) covering the laminated core (5) on each of its two axial end faces (5.1, 5.2), wherein the side walls (10.1, 10.2) each have a number of cut-outs (11.1, 11.2) arranged in a distributed manner in the peripheral direction, which lie in particular on a larger diameter than the centre points of the permanent magnets (7), **characterised in that**
the cut-outs (11) release regions of the axial end faces (5.1, 5.2) covered by the side walls (10.1, 10.2) of the plastic lining (9) as access openings to tap the laminated core (5) in the context of balancing the permanent magnet rotor (3).

2. Electric drive motor according to claim 1, **characterised in that** the at least one cut-out (11) is formed by a circular cylindrical through-opening, which extends in the axial direction from an outer end face (A) of the side wall (10.1, 10.2) of the plastic lining (9) up to the axial end face (5.1, 5.2) of the laminated core (5).

3. Electric drive motor according to claim 1, **characterised in that** the at least one cut-out (11) is formed by a conical through-opening, which extends reducing in size in terms of its diameter in the axial direction starting from an outer end face (A) of the side wall (10.1, 10.2) of the plastic lining (9) as far as the axial end face (5.1, 5.2) of the laminated core (5).

4. Electric drive motor according to one of claims 1 to 3, **characterised in that** the side wall (10.1, 10.2) of the plastic lining (9) in the peripheral direction has two cut-outs (11.1, 11.2) at a distance from one another in the peripheral direction in each sector (S), arranged between two permanent magnet (7), of the side wall (10.1, 10.2) of the plastic lining (9).

5. Electric drive motor according to claim 4, **characterised in that** the laminated core (5) has a number of single sheets stacked one on top of the other, which are connected by connection means (8) to form an overall stack forming the laminated core (5), wherein the connection means (8) are arranged in the peripheral direction in each case in one of the sectors (S) embodied between two permanent magnets (7), such that the cut-outs (11, 11.1, 11.2) are arranged in the side wall (10.1, 10.2) of the plastic lining (9) in the peripheral direction and/or radial direction offset with respect to the connection means (8).

6. Electric drive motor according to one of claims 1 to 5, **characterised in that** the cut-outs (11, 11.1, 11.2) are provided in the side wall (10.1, 10.2) on a peripheral edge of the plastic lining (9) with peripheral wall sections (12), through which the cut-outs (11, 11.1, 11.2) are embodied as edge-closed cut-outs of the plastic lining (9).

7. Electric drive motor according to one of claims 1 to 6, **characterised in that** the side wall (10.1, 10.2) of the plastic lining (9) in the peripheral direction has in each case an indentation (13) in each sector (S), arranged between two permanent magnets (7), of the side wall (10.1, 10.2) of the plastic lining (9).

8. Electric drive motor according to claim 7, **characterised in that** in each case one of the indentations (13) is connected in an airflow-related manner to the cut-outs by means of a connection channel (14) in the side wall (10.1, 10.2) of the plastic lining (9) in each case.

9. Electric drive motor according to claim 8, **characterised in that** the cut-outs (11, 11.1, 11.2) in the side wall (10.1, 10.2) are provided on a peripheral edge of the plastic lining (9) with peripheral wall sections (12), through which the cut-outs (11, 11.1, 11.2) are embodied as edge-closed cut-outs of the plastic lining (9), and the peripheral wall sections (12) are arranged on the edges of the cut-outs (11, 11.1, 11.2) facing the connection channels (14).

10. Electric drive motor according to one of claims 7 to 9, **characterised in that** the indentations (13), which are arranged in each case in each sector (S), arranged between two permanent magnets (7), of the side wall (10.1, 10.2) of the plastic lining (9), are arranged on a smaller diameter in the side wall (10. 1, 10.2) of the plastic lining (9) than the cut-outs (11, 11.1, 11.2), which are likewise arranged in the peripheral direction in each case in the sectors (S), arranged between two permanent magnets (7) in each case, of the side wall (10.1, 10.2) of the plastic lining (9).

11. Electric drive motor according to one of claims 1 to 10, **characterised in that** the laminated core (5) has a hub (15) with a splined hub profile (15.1), which is embodied, in interaction with a smooth-walled motor shaft (4), to fasten the laminated core (5) in a torque-proof manner on the motor shaft (4).

12. Household appliance, in particular dishwasher, washing machine, dryer or extractor hood, having an electric drive motor (1) according to one of claims 1 to 11.

## Revendications

1. Moteur d'entraînement électrique, présentant un stator (2) avec des masses polaires (2.1) et au moins un bobinage statorique (2.2) pouvant être commandé électriquement, et un rotor à aimants permanents (3) logé de façon à pouvoir être entraîné en rotation dans le champ du bobinage statorique (2.2) en laissant une fente annulaire (R), qui présente un arbre de moteur (4) et un noyau feuilleté (5) reposant sur l'arbre de moteur (4), qui présente un nombre d'aimants permanents (7) correspondant au moins au nombre de pôles du rotor à aimants permanents (3), dans lequel les aimants permanents (7) insérés dans le noyau feuilleté (5) sont surmoulés par une enceinte en matière plastique (9) et l'enceinte en matière plastique (9) présente une paroi latérale (10.1, 10.2) recouvrant le noyau feuilleté (5) sur chacune de ses deux faces frontales axiales (5.1, 5.2), dans lequel les parois latérales (10.1, 10.2) présentent respectivement plusieurs évidements (11.1, 11.2) répartis dans le sens circonférentiel, lesquels se trouvent en particulier sur un diamètre supérieur aux points centraux des aimants permanents (7), **caractérisé en ce que** les évidements (11) libèrent des zones des faces frontales axiales (5.1, 5.2) recouvertes par les parois latérales (10.1, 10.2) de l'enceinte en matière plastique (9), sous forme d'orifices d'accès pour percer le noyau feuilleté (5) dans le cadre d'un équilibrage du rotor à aimants permanents (3).

2. Moteur d'entraînement électrique selon la revendication 1, **caractérisé en ce que** l'au moins un évidement (11) est constitué par un orifice de passage cylindrique circulaire, qui s'étend dans le sens axial d'une face frontale extérieure (A) de la paroi latérale (10.1, 10.2) de l'enceinte en matière plastique (9) jusqu'à la face frontale axiale (5.1, 5.2) du noyau feuilleté (5).

3. Moteur d'entraînement électrique selon la revendication 1, **caractérisé en ce que** l'au moins un évidement (11) est constitué par un orifice de passage conique, qui s'étend dans le sens axial au départ d'une face frontale extérieure (A) de la paroi latérale (10.1, 10.2) de l'enceinte en matière plastique (9) jusqu'à la face frontale axiale (5.1, 5.2) du noyau feuilleté (5), en réduisant son diamètre.

4. Moteur d'entraînement électrique selon l'une des revendications 1 à 3, **caractérisé en ce que** la paroi latérale (10.1, 10.2) de l'enceinte en matière plastique (9) présente, dans le sens circonférentiel, respectivement dans chaque secteur (S) de la paroi latérale (10.1, 10.2) de l'enceinte en matière plastique (9) disposé entre deux aimants permanents (7), deux évidements distants l'un de l'autre dans le sens circonférentiel (11.1, 11.2).

5. Moteur d'entraînement électrique selon la revendication 4, **caractérisé en ce que** le noyau feuilleté (5) présente plusieurs tôles individuelles empilées, que des éléments de liaison (8) lient en une pile complète constituant le noyau feuilleté (5), dans lequel les éléments de liaison (8) sont disposés, dans le sens circonférentiel, respectivement de telle façon dans l'un des secteurs (S) formés entre deux aimants permanents (7) que les évidements (11, 11.1, 11.2) sont disposés, dans la paroi latérale (10.1, 10.2) de l'enceinte en matière plastique (9), dans le sens circonférentiel et/ou radial, en décalage par rapport aux éléments de liaison (8).

6. Moteur d'entraînement électrique selon l'une des revendications 1 à 5, **caractérisé en ce que** les évidements (11, 11.1, 11.2) de la paroi latérale (10.1, 10.2) sont pourvus, sur un bord circonférentiel de l'enceinte en matière plastique (9), de sections de paroi circonférentielle (12) via lesquelles les évidements (11, 11.1, 11.2) sont formés sous forme d'évidements à bords fermés de l'enceinte en matière plastique (9).

7. Moteur d'entraînement électrique selon l'une des revendications 1 à 6, **caractérisé en ce que** la paroi latérale (10.1, 10.2) de l'enceinte en matière plastique (9) présente, dans le sens circonférentiel, respectivement dans chaque secteur (S) de la paroi latérale (10.1, 10.2) de l'enceinte en matière plastique (9) disposé entre deux aimants permanents (7), une cavité (13).

8. Moteur d'entraînement électrique selon la revendication 7, **caractérisé en ce que** respectivement une des cavités (13) est reliée respectivement au moyen d'un conduit de liaison (14) dans la paroi latérale (10.1, 10.2) de l'enceinte en matière plastique (9) aux évidements (11, 11.1, 11.2) de façon correspondant à la technique de l'écoulement d'air.

9. Moteur d'entraînement électrique selon la revendication 8, **caractérisé en ce que** les évidements (11, 11.1, 11.2) de la paroi latérale (10.1, 10.2) sont pourvus, sur un bord circonférentiel de l'enceinte en matière plastique (9), de sections de paroi circonférentielle (12) via lesquelles les évidements (11, 11.1, 11.2) sont formés sous forme d'évidements à bords fermés de l'enceinte en matière plastique (9) et les sections de paroi circonférentielle (12) sont disposées de façon opposée aux conduits de liaison (14) sur les bords des évidements (11, 11.1, 11.2).

10. Moteur d'entraînement électrique selon l'une des revendications 7 à 9, **caractérisé en ce que** les cavités (13), disposées respectivement dans chaque secteur (S) de la paroi latérale (10.1, 10.2) de l'enceinte en matière plastique (9) disposé entre deux aimants permanents (7), sont disposées dans la paroi latérale (10.1, 10.2) de l'enceinte en matière plastique (9) sur un diamètre inférieur à celui des évidements (11, 11.1, 11.2) également respectivement disposés dans le sens circonférentiel dans les secteurs (S) de la paroi latérale (10.1, 10.2) de l'enceinte en matière plastique (9) respectivement disposés entre deux aimants permanents (7).

11. Moteur d'entraînement électrique selon l'une des revendications 1 à 10, **caractérisé en ce que** le noyau feuilleté (5) présente un moyeu (15) avec un profil de moyeu cannelé (15.1), formé afin de fixer le noyau feuilleté (5) de façon immobile en rotation sur l'arbre de moteur (4) en coopération avec un arbre de moteur à parois lisses (4).

12. Appareil ménager, en particulier lave-vaisselle, lave-linge, sèche-linge ou hotte aspirante présentant un moteur d'entraînement électrique (1) selon l'une des revendications 1 à 11.
